# EUROPEAN PATENT SPECIFICATION

(11) **EP 1 511 166 B1**
(45) Date of publication and mention of the grant of the patent: **27.10.2010**
(21) Application number: 03730669.3
(22) Date of filing: 28.05.2003
(51) Int. Cl.: H02M 7/12, H02M 7/5387

(54) **POWER CONVERTER**
ENERGIEWANDLER
CONVERTISSEUR DE PUISSANCE

(30) Priority: 03.06.2002 JP 2002161313; 28.01.2003 JP 2003018713
(43) Date of publication of application: 02.03.2005
(73) Proprietor: FUJI ELECTRIC HOLDINGS CO., LTD., Kawasaki-shi, Kanagawa 210-9530 (JP)
(72) Inventor: OKUMA, Yasuhiro, FUJI ELECTRIC CO., LTD., Kawasaki-shi, Kanagawa 210 (JP)
(74) Representative: MERH-IP Matias Erny Reichl Hoffmann
(86) International application number: PCT/JP2003/006692
(87) International publication number: WO 2003/103126

(56) References cited:
- EP-A- 0 486 130
- JP-A- 2000 262 070
- JP-B2- 3 203 464
- US-A- 4 651 265
- US-A- 6 118 676

## Description

### Field of the Invention

The present invention relates to electric power converters having specific features in the main circuit configuration thereof for feeding a stable voltage from an AC power supply to a load.

### Background of the Invention

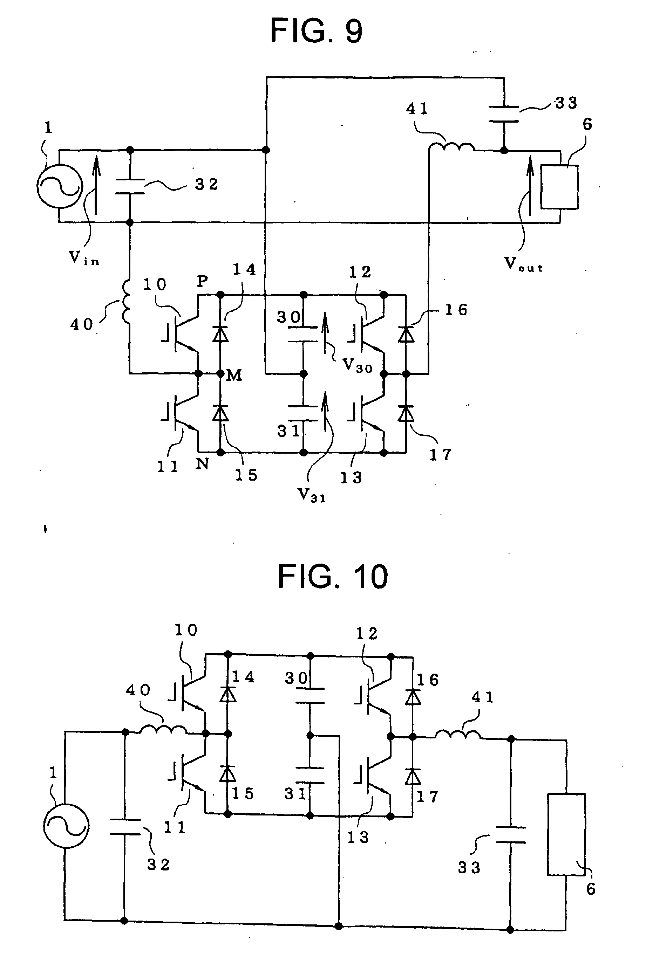

FIG. 10 is a block circuit diagram of a conventional electric power converter for converting AC electric power to DC electric power once and for converting the converted DC electric power back to AC electric power.

Referring now to FIG. 10, a series circuit consisting of semiconductor switching devices 10 and 11 is connected to an end of an AC power supply 1 via a reactor 40. Diodes 14 and 15 are connected in antiparallel connection to the semiconductor switching devices 10 and 11, respectively.

The semiconductor switching devices 10 and 11, controlled by PWM (pulse width modulation), work together with the diodes 14 and 15 as a rectifier circuit that conducts control and conversion operations for storing energy in capacitors 30 and 31 connected in series to each other so that the voltages of the capacitors 30 and 31 may be DC voltages.

A series circuit consisting of switching devices 12 and 13 is connected to the series circuit consisting of the capacitors 30 and 31. Diodes 16 and 17 are connected in antiparallel connection to the switching devices 12 and 13, respectively. By controlling the switching devices 12 and 13 by PWM to make the switching devices 12 and 13 work as an inverter, an arbitrary stable AC voltage is generated from the smoothed DC voltages and the generated AC voltage is fed to a load 6.

A capacitor 32 connected to both ends of the AC power supply 1 works as a filter capacitor. A reactor 41 and a capacitor 33 connected to the input side of the load 6 constitute an LC filter.

An electric power converter substantially identical to the conventional electric power converter shown in FIG. 10 is described in the following Patent Publication 1.

### [Patent Publication 1]

Japanese Patent No. 3203464 (FIG. 1, Paragraphs [0003] and [0004])

The conventional electric power converter described in FIG. 10 has the so-called double converter circuit configuration that converts AC electric power to DC electric power once and converts the DC electric power back to AC electric power.

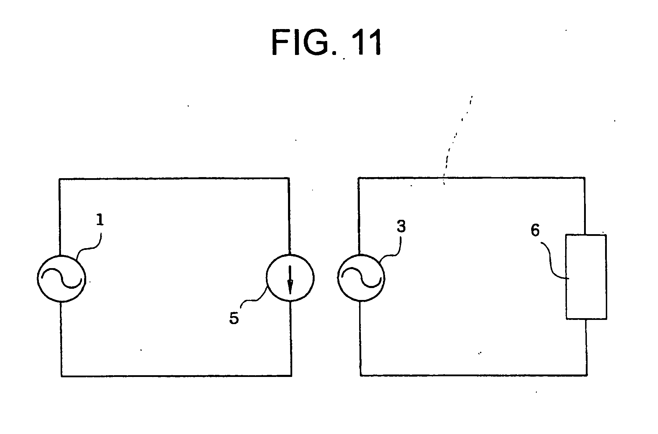

FIG. 11 is a diagram for explaining the principle of the circuit in FIG. 10. In FIG. 10, the converter on the side of the AC power supply 1, including the switching devices 10 and 11 and the diodes 14 and 15, works as a rectifier circuit. Therefore, one may deem, as shown in FIG. 11, the rectifier circuit described above a parallel current source 5, through which all the energy necessary for the load 6 flows.

In FIG. 10, the converter on the side of the load 6, including the switching devices 12 and 13 and the diodes 16 and 17, works as an inverter that feeds a certain voltage to the load 6. Therefore, one may deem, as shown in FIG. 11, the inverter described above a parallel voltage source 3, through which all the energy necessary for the load 6 flows.

Since all the energy fed to the load flows through the converter on the side of the AC power supply 1 and through the converter on the side of the load 6, the loses caused by the conventional electric power converters of the double converter type described in FIG. 10 and the Patent Publication 1 are high. Therefore, the conversion efficiency lowers and the running costs soar.

In view of the foregoing, it would be desirable to change the connection of the double converters to the AC power supply 1 and the load 6 to provide a so-called serial parallel converter configuration, in which the converter on the side of the load 6 works as a series converter for compensating only the change caused in the voltage of the AC power supply 1 and the converter on the side of the AC power supply 1 works as a parallel converter for compensating only the energy necessary for compensating the voltage change.

EP 0 486 130 A2 shows a power conversion apparatus circuit including pairs of rectifying devices connected together at a first node, a pair of capacitors connected together at a second node, and pairs of controllable switching devices connected together at a third node, each of the pairs being connected in parallel by DC bus lines. The AC power source is connected between the first and second nodes and the output voltage to a load being provided between the first and third nodes. The switching devices are controlled to switch on and off at proper times to provide a controllable output voltage to the load which is at the same frequency as the input voltage and which may be controlled from zero to substantially twice the peak-to-peak input voltage.

US 6,118,676 shows a dynamic voltage sag corrector including a static bypass switch and a regulator/storage module connected together in parallel between input terminals and output terminals. Under normal operating conditions, the static bypass switch is closed, and a normal line voltage level is provided directly from the input terminals to the output terminals via the static bypass switch. When a voltage sag condition is indicated, the static bypass switch is opened, and the regulator/storage module is controlled to provide a near normal output voltage signal to the output terminals. The regulator/storage module includes a power conversion circuit which is controlled to provide the desired output voltage signal by adding a voltage level on storage capacitors to the available input line voltage signal.

US 4,651,265 shows an active power conditioner system having at least two active conditioners being connected in series with a common DC source, and being mounted as a unit between two pairs of AC terminals to act either as a tie-in link between two AC power sources, as a buck/boost regulator between one AC power source and its load, or as VAR compensator as well as active power conditioner between phases of a multiphase AC option.

### Summary of the Invention

In other words, it is an object of the present invention to provide an electric power converter that exhibits a high conversion efficiency and facilitates suppressing the running costs thereof.

It also is a further object of the present invention to provide an electric power converter that facilitates feeding a certain voltage to the load while suppressing the voltage change of the AC power supply 1.

For solving the above objects of the present invention, an electric power converter according to claim 1 is proposed. The dependent claims relate to preferred embodiments.

An electric power converter includes a series converter connected in series between an AC power supply and a load, the series converter including capacitors as the power supply thereof; a parallel converter connected in parallel to the AC power supply; the series converter compensating the change caused in the voltage of the AC power supply to keep the voltage fed to the load at a certain value; and the parallel converter conducting charging and discharging operations between the AC power supply and the capacitors to compensate the voltage changes of the capacitors caused by the compensating operation of the series converter.

The electric power converter according to a first aspect further comprises a first series switch circuit including a first semiconductor switching device, a second semiconductor switching device, a diode connected in antiparallel connection to the first semiconductor switching device, and a diode connected in antiparallel connection to the second semiconductor switching device, the first and second semiconductor switching devices being connected in series to each other; a second series switch circuit including a third semiconductor switching device, a fourth semiconductor switching device, a diode connected in antiparallel connection to the third semiconductor switching device, and a diode connected in antiparallel connection to the fourth semiconductor switching device, the third and fourth semiconductor switching devices being connected in series to each other; a series capacitor circuit including a first capacitor and a second capacitor connected in series to each other; a third capacitor connected in parallel to the AC power supply; a fourth capacitor connected in parallel to the load; a first reactor connected between the first end of the AC power supply and the series connection point in the first series switch circuit, the first end of the AC power supply being connected to the first end of the load; a second reactor connected between the second end of the load and the series connection point in the second series switch circuit; the first series switch circuit, the second series switch circuit, and the series capacitor circuit being connected in parallel to each other to constitute a first parallel connection circuit; the second end of the AC power supply being connected the series connection point in the series capacitor circuit; the series capacitor circuit and the second series switch circuit constituting the series converter; and the series capacitor circuit and the first series switch circuit constituting the parallel converter.

The electric power converter may comprise a voltage detecting means detecting the input voltage of the electric power converter, the output voltage of the electric power converter, and the voltages in the first parallel connection circuit; a current detecting means detecting the current flowing through the first reactor; a controlling means controlling the output voltage of the electric power converter using the voltage values detected by the voltage detecting means; and the controlling means controlling the current flowing through the first reactor using the current value detected by the current detecting means.

The electric power converter may comprise a changeover switch including a first changeover contact, a second changeover contact, and a common terminal; the connection between the second end of the load and the first end of the second reactor being disconnected; the first changeover contact being connected to the series connection point in the series capacitor circuit; the second end of the load being connected to the first end of the second reactor via the common terminal and the second changeover contact while the electric power converter is working normally; and the common terminal being connected to the first changeover contact when an anomaly is caused in the electric power converter to feed a voltage from the AC power supply to the load.

The electric power converter may comprise an energy storage element; and a charging and discharging means connected to the energy storage element to feed a voltage to the load using the energy stored in the energy storage element, when the power supply voltage is anomalous.

The electric power converter may comprise an energy storage element; and a charging and discharging means connected to the energy storage element to feed a voltage to the load using the energy stored in the energy storage element, when the power supply voltage is anomalous.

The electric power converter may comprise a tapped third reactor in substitution for the second reactor, the third reactor including a first end, a second end, and a tap terminal; the series connection point in the series capacitor circuit being connected to the first end of the third reactor; the series connection point in the second series switch circuit being connected to the second end of the load via the second end of the third reactor; the second end of the AC power supply being disconnected from the series connection point in the series capacitor circuit and connected to the tap terminal of the third reactor.

The electric power converter may comprise a tapped third reactor in substitution for the second reactor, the third reactor including a first end, a second end, and a tap terminal; the series connection point in the series capacitor circuit being connected to the first end of the third reactor; the series connection point in the second series switch circuit being connected to the second end of the load via the second end of the third reactor; the second end of the AC power supply being disconnected from the series connection point in the series capacitor circuit and connected to the tap terminal of the third reactor.

The electric power converter may comprise a tapped third reactor in substitution for the second reactor, the third reactor including a first end, a second end, and a tap terminal; the series connection point in the series capacitor circuit being connected to the first end of the third reactor; the series connection point in the second series switch circuit being connected to the second end of the load via the second end of the third reactor; the second end of the AC power supply being disconnected from the series connection point in the series capacitor circuit and connected to the tap terminal of the third reactor.

As an alternative to the first aspect, the electric power converter according to a second aspect further comprises a first series switch circuit including a first semiconductor switching device, a second semiconductor switching device, a diode connected in antiparallel connection to the first semiconductor switching device, and a diode connected in antiparallel connection to the second semiconductor switching device, the first and second semiconductor switching devices being connected in series to each other; a second series switch circuit including a third semiconductor switching device, a fourth semiconductor switching device, a diode connected in antiparallel connection to the third semiconductor switching device, and a diode connected in antiparallel connection to the fourth semiconductor switching device, the third and fourth semiconductor switching devices being connected in series to each other; a series capacitor circuit including a first capacitor and a second capacitor connected in series to each other; a third capacitor connected in parallel to the AC power supply; a first reactor connected between the first end of the AC power supply and the series connection point in the first series switch circuit, the first end of the AC power supply being connected to the first end of the load; a second reactor connected between the second end of the load and the series connection point in the second series switch circuit; a fourth capacitor connected between the second end of the load and the second end of the AC power supply; the first series switch circuit, the second series switch circuit, and the series capacitor circuit being connected in parallel to each other to constitute a first parallel connection circuit; the second end of the AC power supply being connected the series connection point in the series capacitor circuit; the series capacitor circuit and the second series switch circuit constituting the series converter; and the series capacitor circuit and the first series switch circuit constituting the parallel converter.

The electric power converter may comprise a voltage detecting means detecting the input voltage of the electric power converter, the output voltage of the electric power converter, and the voltages in the first parallel connection circuit; a current detecting means detecting the current flowing through the first reactor; a controlling means controlling the output voltage of the electric power converter using the voltage values detected by the voltage detecting means; and the controlling means controlling the current flowing through the first reactor using the current value detected by the current detecting means.

The electric power converter may comprise an energy storage element; and a charging and discharging means connected to the energy storage element to feed a voltage to the load using the energy stored in the energy storage element, when the power supply voltage is anomalous.

The electric power converter may comprise a tapped third reactor in substitution for the second reactor, the third reactor including a first end, a second end, and a tap terminal; the series connection point in the series capacitor circuit being connected to the first end of the third reactor; the series connection point in the second series switch circuit being connected to the second end of the load via the second end of the third reactor; the second end of the AC power supply being disconnected from the series connection point in the series capacitor circuit and connected to the tap terminal of the third reactor.

The electric power converter may comprise a tapped third reactor in substitution for the second reactor, the third reactor including a first end, a second end, and a tap terminal; the series connection point in the series capacitor circuit being connected to the first end of the third reactor; the series connection point in the second series switch circuit being connected to the second end of the load via the second end of the third reactor; the second end of the AC power supply being disconnected from the series connection point in the series capacitor circuit and connected to the tap terminal of the third reactor.

### Brief Description of the Drawing Figures

- FIG. 1: is a block circuit diagram of an electric power converter according to a first embodiment of the invention.
- FIG. 2: is a diagram for explaining the principle of the electric power converter in FIG. 1.
- FIG. 3: is a wave chart for explaining the operations of the series converter in FIG. 1.
- FIG. 4: is a block circuit diagram of an electric power converter according to a second embodiment of the invention.
- FIG. 5: is a block circuit diagram of an electric power converter according to a third embodiment of the invention.
- FIG. 6: is a block circuit diagram of an electric power converter according to a fourth embodiment of the invention.
- FIG. 7: is a block circuit diagram of an electric power converter according to a fifth embodiment of the invention.
- FIG. 8: is a block circuit diagram of an electric power converter according to a sixth embodiment of the invention.
- FIG. 9: is a block circuit diagram of an electric power converter according to a seventh embodiment of the invention.
- FIG. 10: is a block circuit diagram of a conventional electric power converter for converting AC electric power to DC electric power once and for converting the converted DC electric power back to AC electric power.
- FIG. 11: is a diagram for explaining the principle of the electric power converter in FIG. 10.

### Best Modes for carrying out the Invention

Now the invention will be described in detail hereinafter with reference to the accompanied drawing figures which illustrate preferred embodiments of the invention.

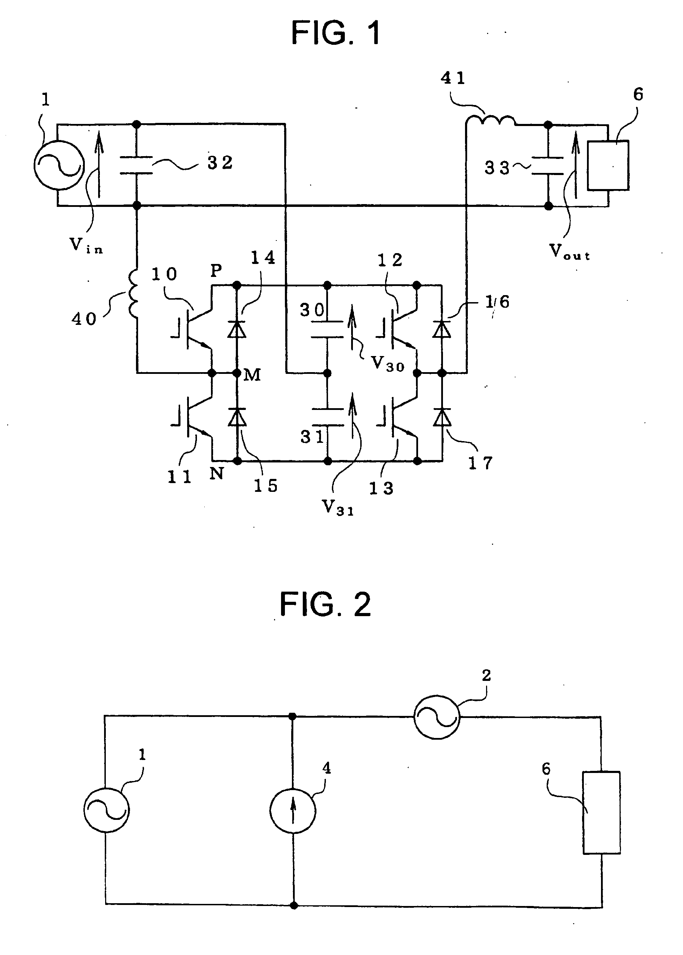

FIG. 1 is a block circuit diagram of an electric power converter according to the first embodiment of the invention. The electric power converter according to the first embodiment corresponds to the subject matters of the appended Claims 1 and 2.

Referring now to FIG. 1, the electric power converter according to the first embodiment includes a series circuit including an IGBT (insulated gate bipolar transistor) and such a first semiconductor switching device 10, to which a first diode 14 is connected in antiparallel connection, and an IGBT and such a second semiconductor switching device 11, to which a second diode 15 is connected in antiparallel connection. (Hereinafter, the series circuit of the switching devices 10 and 11 will be referred to as the "first series switch circuit".) The electric power converter according to the first embodiment includes also a series circuit including a third semiconductor switching device 12, to which a third diode 16 is connected in antiparallel connection, and a fourth semiconductor switching device 13, to which a fourth diode 17 is connected in antiparallel connection. (Hereinafter, the series circuit of the switching devices 12 and 13 will be referred to as the "second series switch circuit".) The electric power converter according to the first embodiment includes also a series circuit including a first capacitor 30 and a second capacitor 31. (Hereinafter, the series circuit of the capacitors 30 and 31 will be referred to as the "series capacitor circuit".) The first series switch circuit, the second series switch circuit, and the series capacitor circuit are connected in parallel to each other. A third capacitor 32 is connected in parallel to an AC power supply 1. A fourth capacitor 33 is connected in parallel to a load 6.

An end of the AC power supply 1 is connected to an end of the load 6 and the other end the AC power supply 1 is connected to the series connection point of the capacitors 30 and 31. The connection point of the AC power supply 1 and the load 6 is connected to the series connection point of the first and second switching devices 10 and 11 via a first reactor 40. The other end of the load 6 is connected to the series connection point of the third and fourth switching devices 12 and 13 via a second reactor 41.

When one deems the capacitors 30 and 31 a power supply for the converter including the switching devices in the circuit configuration described above, the capacitors 30, 31, the switching devices 12, 13, and the diodes 16, 17 are connected in series between the AC power supply 1 and the load 6. Hereinafter, the series circuit including the capacitors 30, 31, the switching devices 12, 13, and the diodes 16, 17 will be referred to as the "series converter".

The capacitors 30, 31, the switching devices 10, 11, and the diodes 14, 15 are connected in parallel to the AC power supply 1. Hereinafter, the parallel circuit including the capacitors 30, 31, the switching devices 10, 11, and the diodes 14, 15 will be referred to as the "parallel converter".

FIG. 2 is a diagram for explaining the principle of the electric power converter in FIG. 1.

Referring now to FIG. 2, a parallel compensation current source 4 represents the parallel converter described above and a series compensation voltage source 2 the series converter described above. When the series compensation voltage source 2 generates an arbitrary voltage, the sum of the voltage from the AC power supply 1 (the AC voltage source) and the voltage from the series compensation voltage source 2 is applied to the load 6. Therefore, even when the voltage of the AC power supply 1 varies (e.g. drops), a certain voltage is fed to the load 6 by compensating the voltage drop by adding the variable voltage from the series compensation voltage source 2 to the voltage of the AC power supply 1.

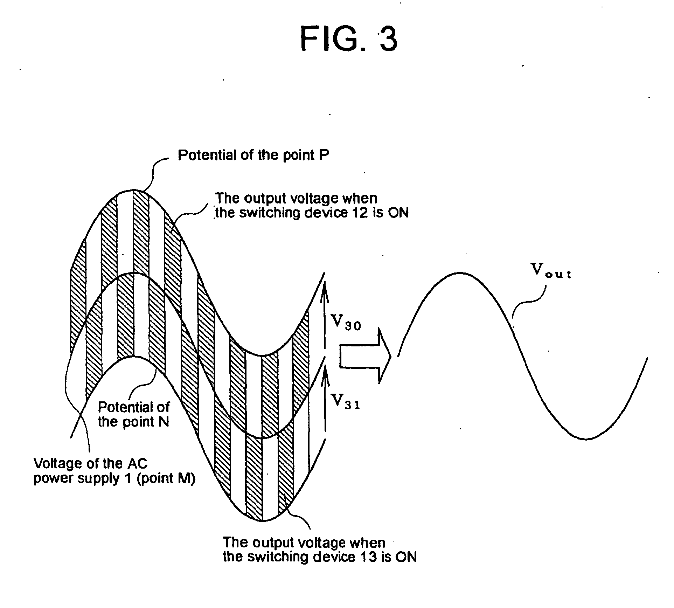

Now the operations of the series converter in FIG. 1. will be described below with reference to FIG. 3.

As described in FIG. 3, the potential of the point P is the potential obtained by superposing the voltage V₃₀ of the capacitor 30 on the potential of the point M in FIG. 1 (the voltage Vin of the AC power supply 1). The potential of the point N is the potential obtained by superposing the voltage V₃₁ of the capacitor 31 on the potential of the point M in FIG. 1. By controlling the superposed voltages (the voltages indicated by hatching in FIG. 3) by means of the chopping of the switching devices 12 and 13, an arbitrary voltage is superposed on the potential of the point M and the voltage Vout across the load 6 is kept at a certain value.

The chopping by on-off control of the switching devices 12 and 13 is conducted by the PWM control that controls the voltage Vout across the load 6 at a reference value or by the PWM control that controls the voltage added to or subtracted from the potential of the point M at a reference value.

It is obvious that the power supply controlled by PWM is capable of shaping the voltage fed to the load 6 with a sinusoidal waveform or with an arbitrary waveform, if necessary.

In the series of the operations described above, the parallel converter (parallel compensation current source 4) conducts charging and discharging operations between the AC power supply 1 and the capacitors 30 and 31 to compensate the voltage changes (drop and rise) of the capacitors 30 and 31 caused by the operations of the series converter (series compensation power supply 2).

As a result, the energy fed to the load 6 flows only through the series converter. Only the energy used for the voltage compensation by the series converter flows through the parallel converter. Therefore, the losses caused by the parallel converter are reduced as compared with the conventional double converter configuration and the conversion efficiency of the entire electric power converter is improved.

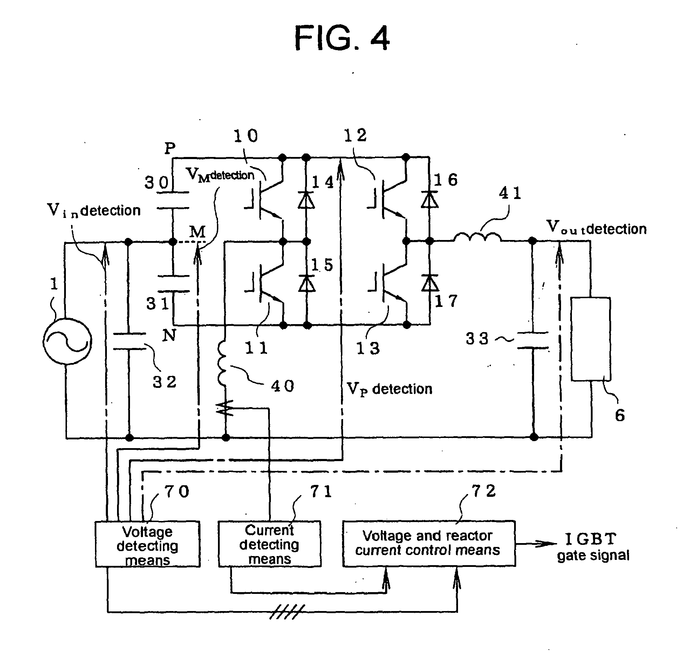

FIG. 4 is a block circuit diagram of an electric power converter according to the second embodiment of the invention. The electric power converter according to the second embodiment corresponds to the subject matter of the appended Claim 3.

The main circuit configuration of the electric power converter according to the second embodiment shown in FIG. 4 is substantially identical with the main circuit configuration of the electric power converter according to the first embodiment shown in FIG. 1. The electric power converter according to the second embodiment is different from the electric power converter according to the first embodiment in that the electric power converter according to the second embodiment includes a voltage detecting means 70 for detecting the voltage Vin across the AC power supply 1, the voltage V_{M} (V_{MN}) of the pint M on the basis of the potential of the point N, the voltage V_{P} (V_{PN}) of the pint P on the basis of the potential of the point N, and the voltage Vout, a current detecting means 71 for detecting the current flowing through the reactor 40, and a voltage and reactor current control means 72 for controlling the output voltage and for controlling the current flowing,through the reactor 40.

In the circuit configuration described above, the voltage Vin across the AC power supply 1 detected by the voltage detecting means 70 is used as a reference sinusoidal wave. The current, flowing through the reactor 40 and detected by the current detecting means 71, is controlled on the basis of the reference sinusoidal wave by the voltage and reactor current control means 72 so that the current flowing through the reactor 40 may be sinusoidal. When the circuit shown in FIG. 1 feeds a sinusoidal voltage Vout to the load 6, a sinusoidal current is made to flow following the sinusoidal voltage.

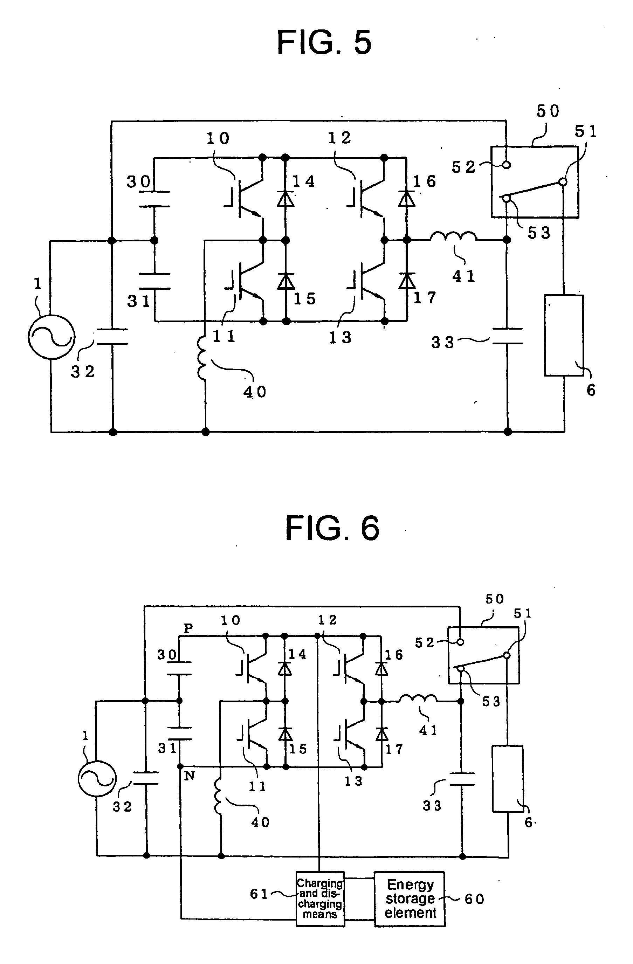

FIG. 5 is a block circuit diagram of an electric power converter according to the third embodiment of the invention. The electric power converter according to the third embodiment corresponds to the subject matter of the appended Claim 4.

The electric power converter according to the third embodiment is different from the electric power converter according to the first embodiment in that the electric power converter according to the third embodiment includes a changeover switch 50 having a first changeover contact 52, a second changeover contact 53 and a common terminal 51. An end of the load 6 is connected to the common terminal 51. The series connection point of the capacitors 30 and 31 is connected to the first changeover contact 52. The connection point of the reactor 41 and the capacitor 33 is connected to the second changeover contact 53.

When an anomaly is caused due to a fault and such a cause in the electric power converters shown in FIGs. 1 and 4 and operating in the state, under which the common terminal 51 is connected to the second changeover contact 53 (substantially identical with the state shown in FIG. 1), the voltage feed to the load 6 is maintained by changing over the connection of the common terminal 51 from the second changeover contact 53 (the side of the electric power converter) to the first changeover contact 52 (the side of the AC power supply 1). It is obvious that the conditions necessary for the changeover in the changeover switch 50 are given by the signals from the control circuit of the converter, the contact signals or their appropriate combinations.

FIG. 6 is a block circuit diagram of an electric power converter according to the fourth embodiment of the invention. The electric power converter according to the fourth embodiment corresponds to the subject matter of the appended Claim 6.

The electric power converter according to the fourth embodiment includes an energy storage element 60 connected in parallel between the points P and N via a charging and discharging means 61. Although the energy storage element 60 and the charging and discharging means 61 are added exemplary to the circuit shown in FIG. 5, the energy storage element 60 and the charging and discharging means 61 may be added to the circuits shown in FIGs. 1 and 4 with no problem. The circuits of FIGs. 1 and 4, to which the energy storage element 60 and the charging and discharging means 61 are added, correspond to the subject matter of the appended Claim 5.

The charging and discharging means 61 is formed of a combination of a semiconductor switch and a magnetic component part such as a reactor. A battery and such a secondary cell or a flywheel may be used for the energy storage element 60.

In the circuit configuration described above, energy is stored in the energy storage element 60 via the charging and discharging means 61 while the AC power supply 1 is working normally. When the electric power is not fed sufficiently to the load 6 due to the anomaly of the AC power supply 1, the energy storage element 60 is connected between the points P and N via the charging and discharging means 61.

By means of the connection described above, energy is stored in the energy storage element 60 via the charging and discharging means 61 when the AC power supply 1 is working normally, and the energy is discharged from the energy storage element 60 to the capacitors 30 and 31 via the charging and discharging means 61 when the anomaly of the AC power supply 1 such as service interruption is caused. Thus, the circuit configuration according to the fourth embodiment facilitates using the parallel converter and the series converter continuously to keep feeding a desired voltage stably to the load 6 even when the anomaly of the AC power supply 1 is caused.

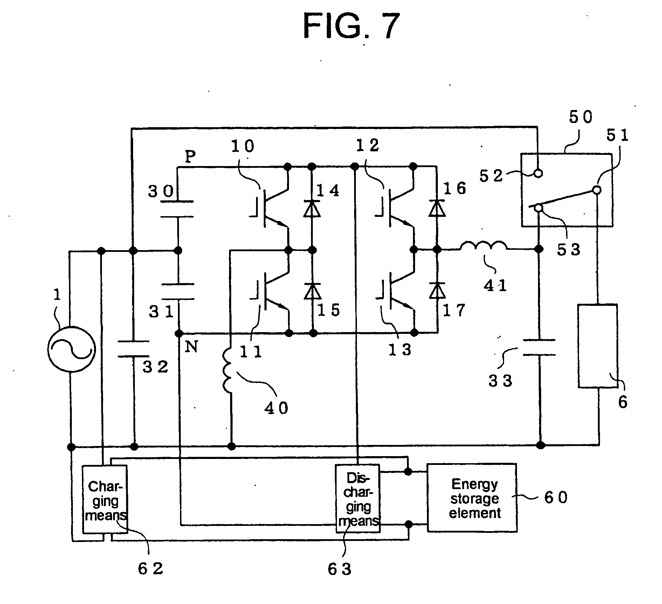

FIG. 7 is a block circuit diagram of an electric power converter according to the fifth embodiment of the invention. The electric power converter according to the fifth embodiment corresponds to the subject matter of the appended Claim 6.

The electric power converter according to the fifth embodiment divides the charging and discharging means 61 into a charging means 62 and a discharging means 63. The charging means 62 is connected to both ends of the AC power supply 1. The discharging means 63 is connected between the points P and N. And, the energy storage element 60 is connected in parallel to the charging means 62 and the discharging means 63. The charging means 62, the discharging means 63, and the energy storage element 60 may be added to the circuit configurations shown in FIGs. 1 and 4 with no problem. The circuits of FIGs. 1 and 4, to which the charging means 62, the discharging means 63, and the energy storage element 60 are added, correspond to the subject matter of the appended Claim 5.

In the circuit configurations as described above, the charging means 62 charges up the energy storage element 60 while the AC power supply 1 is working normally. When the anomaly of the AC power supply 1 such as service interruption is caused, the energy stored in the energy storage element 60 is fed to the capacitors 30 and 31 using the discharging means 63. The parallel converter and the series converter are made to work using the energy fed to the capacitors 30 and 31 to feed a voltage to the load 6.

The charging means 62 and the discharging means 63 are formed of a combination of a semiconductor switch and a magnetic component part. The energy storage element 60 as described with reference to FIG. 6 may be used for the electric power converter according to the fifth embodiment.

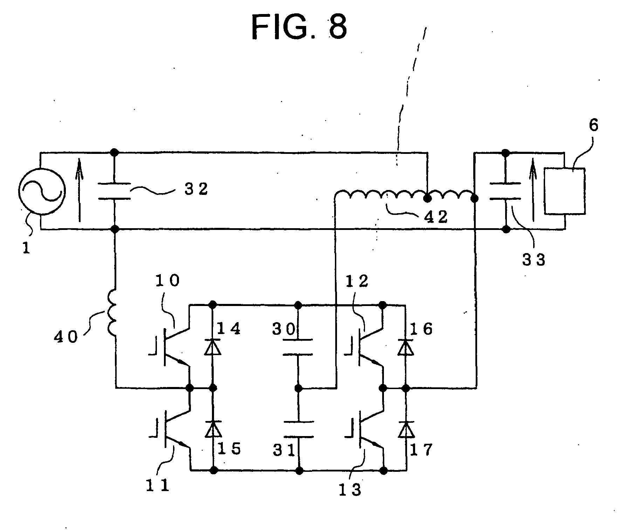

FIG. 8 is a block circuit diagram of an electric power converter according to the sixth embodiment of the invention. The electric power converter according to the sixth embodiment corresponds to the subject matter of the appended Claim 7.

In the circuit configurations described, for example in the circuit configuration described with reference to FIG. 1, the reactor 41 is changed to a tapped reactor 42. An end of the tapped reactor 42 is connected to the series connection point of the capacitors 30 and 31. The other end of the tapped reactor 42 is connected to the end of the load 6 not connected to the AC power supply 1 and the series connection point of the switching devices 12 and 13. And, the end of the AC power supply 1 not connected to the load 6 is connected to the tap terminal of the tapped reactor 42.

Since the current flowing through the series converter formed of the capacitors 30, 31, the switching devices 12, 13, and the diodes 16, 17 is reduced by the circuit configuration described above, the switching loses are reduced and the conversion efficiency is further reduced.

Since the parallel converter works in the same manner as described above, their duplicated descriptions will be omitted for the sake of simplicity.

The circuit configuration that uses the tapped reactor 42 is applicable to the electric power converters described with reference to FIGs. 4 through 7 as described in the appended Claims 8 and 9.

FIG. 9 is a block circuit diagram of an electric power converter according to the seventh embodiment of the invention. The electric power converter according to the seventh embodiment corresponds to the subject matter of the appended Claim 10.

The circuit configuration according to the seventh embodiment changes the connection point of the fourth capacitor 33 in FIG. 1. According to the seventh embodiment, the fourth capacitor 33 is connected between the connection point of the load 6 and the second reactor 41 and the series connection point of the first and second capacitors 30 and 31.

Since the other configurations are the same as described in FIG. 1, their duplicated descriptions will be omitted.

In the circuit configuration described above, the capacitors 30, 31, the switching devices 12, 13, and the diodes 16, 17 constitute a series converter connected in series between the AC power supply 1 and the load 6 in the same manner as described in FIG. 1. The capacitors 30, 31, the switching devices 10, 11, and the diodes 14, 15 constitute a parallel converter connected in parallel to the AC power supply 1.

The first reactor 40 and the third capacitor 32 constitute an AC filter that suppresses the switching ripples of the parallel converter. The second reactor 41 and the fourth capacitor 33 constitute an AC filter that suppresses the switching ripples of the series converter.

The electric power converter according to the seventh embodiment works in the same manner as the electric power converter according to the first embodiment shown in FIG. 1. By making the series compensation voltage source 2 (series converter) shown in FIG. 2 generate an arbitrary voltage, the voltage from the AC power supply 1 (AC voltage source) and the voltage from the series compensation voltage source 2 are added to each other and applied to the load 6. As a result, even when the voltage of the AC power supply 1 drops, a certain voltage is fed to the load 6 by compensating the voltage drop by adding the variable voltage from the series compensation voltage source 2 to the voltage of the AC power supply 1.

The addition and subtraction of the series compensation voltage source 2 to and from the AC power supply 1 can be realized by the PWM control of the series converter using the capacitors 30 and 31 for the power supply thereof. The energy change caused by the charging and discharging of the capacitors 30 and 31 for the voltage addition and subtraction can be compensated by charging and discharging the capacitors 30 and 31 by means of the PWM control of the parallel compensation current source (parallel converter) 4 so that the total energy balance may be kept.

Since the switching ripples (high-frequency ripples) caused by the PMW operations of the parallel converter and the series converter are removed by the AC filter consisting of the reactor 41 and the capacitor 33 or by the AC filter consisting of the reactor 40 and the capacitor 32, the switching ripples never flow out to the side of the power supply 1 nor to the side of the load 6.

The energy fed to the load 6 flows only through the series converter in the electric power converter according to the seventh embodiment too. Only the energy used for the voltage compensation by the series converter flows through the parallel converter. Therefore, the losses caused by the parallel converter are reduced as compared with the conventional double converter configuration and the conversion efficiency of the entire electric power converter is improved.

The voltage detecting means 70, the current detecting means 71, and the voltage and reactor current control means 72 shown in FIG. 4 may be added to the circuit configuration shown in FIG. 9. The resulting circuit configuration corresponds to the subject matter of the appended Claim 11.

The charging and discharging means 61 and the energy storage element 60 shown in FIG. 6 may be added to the circuit configuration shown in FIG. 9. Alternatively, the charging means 62, the discharging means 63 and the energy storage element 60 shown in FIG. 7 may be added to the circuit configuration shown in FIG. 9. The resulting circuit configurations correspond to the subject matter of the appended Claim 12.

The reactor 41 in the circuit configuration shown in FIG. 9 may be replaced by the tapped reactor 42 shown in FIG. 8. In the same manner as in the circuit configuration shown in FIG. 8, the both ends of the tapped reactor 42 may be connected to the series connection point of the capacitors 30 and 31 and to the series connection point of the switching devices 12 and 13, and the tap terminal of the tapped reactor 42 may be connected to an end of the AC power supply 1. The resulting circuit configuration corresponds to the subject matter of the appended Claim 13.

Alternatively, the reactor 41 in the circuit configuration shown in FIG. 9 may be replaced by the tapped reactor 42 shown in FIG. 8, and the combination of the charging and discharging means 61 and the energy storage element 60 shown in FIG. 6 or the combination of the charging means 62, the discharging means 63 and the energy storage element 60 shown in FIG. 7 may be added to the modified circuit configuration described above. The resulting circuit configuration corresponds to the subject matter of the appended Claim 14.

### Industrial Application

As described above, the electric power converter according to the invention is applicable industrially as an electric power converter of the double converter type that facilitates feeding arbitrary AC electric power from an AC power supply to a load in the form of a current output by the operations of a series converter and a parallel converter. The electric power converter according to the invention facilitates improving the conversion efficiency by suppressing the loses caused by either one of the converters and reducing the running costs thereof. The electric power converter according to the invention facilitates elongating the lifetime thereof and improving the reliability thereof, since the electric power converter according to the invention employs neither electrolytic capacitor nor such a component part that should be replaced periodically.

## Claims

1. An electric power converter comprising:
a series converter connected in series between an AC power supply (1) and a load (6), the series converter comprising capacitors as the converter power supply thereof;
a parallel converter connected in parallel to the AC power supply (1);
the series converter compensating the change caused in the voltage of the AC power supply (1), whereby to keep the voltage fed to the load (6) at a certain value; and
the parallel converter conducting charging and discharging operations between the AC power supply (1) and the capacitors, whereby to compensate the voltage changes of the capacitors caused by the compensating operation of the series converter,
wherein the electric power converter further comprises:
a first series switch circuit comprising a first semiconductor switching device (10), a second semiconductor switching device (11), a diode (14) connected in antiparallel connection to the first semiconductor switching device (10), and a diode (15) connected in antiparallel connection to the second semiconductor switching device (11), the first and second semiconductor switching devices being connected in series to each other;
a second series switch circuit comprising a third semiconductor switching device (12), a fourth semiconductor switching device (13), a diode (16) connected in antiparallel connection to the third semiconductor switching device (12), and a diode (17) connected in antiparallel connection to the fourth semiconductor switching device (13), the third and fourth semiconductor switching devices being connected in series to each other;
a series capacitor circuit comprising a first capacitor (30) and a second capacitor (31) connected in series to each other;
a fourth capacitor (33) connected in parallel to the load (6) or connected between the second end of the load (6) and the second end of the AC power supply (1);
a second reactor (41) connected between the second end of the load (6) and the series connection point in the second series switch circuit;
the first series switch circuit, the second series switch circuit, and the series capacitor circuit being connected in parallel to each other, whereby to constitute a first parallel connection circuit;
the second end of the AC power supply (1) being connected to the series connection point in the series capacitor circuit;
the series capacitor circuit and the second series switch circuit constituting the series converter; and
the series capacitor circuit and the first series switch circuit constituting the parallel converter
**characterized by**
a first reactor (40) connected between the first end of the AC power supply (1) and the series connection point in the first series switch circuit, the first end of the AC power supply (1) being connected to the first end of the load (6); and
a third capacitor (32) connected in parallel to the AC power supply (1).

2. The electric power converter according to Claim 1, further comprising:
a voltage detecting means (70) detecting the input voltage of the electric power converter, the output voltage of the electric power converter, and the voltages in the first parallel connection circuit:
a current detecting means (71) detecting the current flowing through the first reactor (40);
a controlling means (72) controlling the output voltage of the electric power converter using the voltage values detected by the voltage detecting means (70); and
the controlling means (72) controlling the current flowing through the first reactor (40) using the current value detected by the current detecting means (71).

3. The electric power converter according to Claim 1 or 2, further comprising:
a changeover switch (50) comprising a first changeover contact (52), a second changeover contact (53), and a common terminal (51);
the connection between the second end of the load (6) and the first end of the second reactor (41) being disconnected;
the first changeover contact (52) being connected to the series connection point in the series capacitor circuit;
the second end of the load (6) being connected to the first end of the second reactor (41) via the common terminal (51) and the second changeover contact (53) while the electric power converter is working normally; and
the common terminal (51) being connected to the first changeover contact (52) when an anomaly is caused in the electric power converter, whereby to feed a voltage from the AC power supply (1) to the load (6).

4. The electric power converter according to any one of Claims 1 to 3, further comprising:
an energy storage element (60); and
a charging and discharging means (61) connected to the energy storage element (60), whereby to feed a voltage to the load (6) using the energy stored in the energy storage element (60), when the power supply voltage is anomalous.

5. The electric power converter according to any one of Claims 1 to 4, comprising:
a tapped third reactor (42) in substitution for the second reactor (41), the third reactor (42) comprising a first end, a second end, and a tap terminal;
the series connection point in the series capacitor circuit being connected to the first end of the third reactor (42);
the series connection point in the second series switch circuit being connected to the second end of the load (6) and the second end of the third reactor (42);
the second end of the AC power supply (1) being disconnected from the series connection point in the series capacitor circuit and connected to the tap terminal of the third reactor (42).

## Patentansprüche

1. Elektroenergiewandler mit:
einem Reihenwandler, der zwischen einer Wechselstromquelle (1) und einer Last (6) in Reihe geschaltet ist, wobei der Reihenwandler Kondensatoren als seine Wandlerenergiequelle umfasst;
einem Parallelwandler, der mit der Wechselstromquelle (1) parallel geschaltet ist;
wobei der Reihenwandler die Änderung kompensiert, die in der Spannung der Wechselstromquelle (1) verursacht wird, wodurch die der Last (6) zugeführte Spannung auf einem bestimmten Wert gehalten werden soll; und
der Parallelwandler Lade- und Entladevorgänge zwischen der Wechselstromquelle (1) und den Kondensatoren durchführt, wodurch die Spannungsänderungen der Kondensatoren, die durch den Kompensationsvorgang des Reihenwandlers verursacht werden, kompensiert werden sollen;
wobei der Elektroenergiewandler weiterhin umfasst:
einen ersten Reihenschalterstromkreis, der eine erste Halbleiterschaltvorrichtung (10), eine zweite Halbleiterschaltvorrichtung (11), eine Diode (14), die in antiparalleler Schaltung mit der ersten Halbleiterschaltvorrichtung (10) verbunden ist, und eine Diode (15) umfasst, die in antiparalleler Schaltung mit der zweiten Halbleiterschaltvorrichtung (11) verbunden ist, wobei die erste und zweite Halbleiterschaltvorrichtung miteinander in Reihe geschaltet sind;
einen zweiten Reihenschalterstromkreis, der eine dritte Halbleiterschaltvorrichtung (12), eine vierte Halbleiterschaltvorrichtung (13), eine Diode (16), die in antiparalleler Schaltung mit der dritten Halbleiterschaltvorrichtung (12) verbunden ist, und eine Diode (17) umfasst, die in antiparalleler Schaltung mit der vierten Halbleiterschaltvorrichtung (13) verbunden ist, wobei die dritte und vierte Halbleiterschaltvorrichtung miteinander in Reihe geschaltet sind;
einen Reihenkondensatorschaltkreis, der einen ersten Kondensator (30) und einen zweiten Kondensator (31) umfasst, die miteinander in Reihe geschaltet sind;
einen vierten Kondensator (33), der mit der Last (6) parallel geschaltet oder zwischen dem zweiten Ende der Last (6) und dem zweiten Ende der Wechselstromquelle (1) verbunden ist;
einen zweiten Reaktor (41), der zwischen dem zweiten Ende der Last (6) und dem Reihenschaltungspunkt im zweiten Reihenschalterstromkreis verbunden ist;
wobei der erste Reihenschalterstromkreis, der zweite Reihenschalterstromkreis und der Reihenkondensatorstromkreis parallel zueinander geschaltet sind, wodurch ein erster Parallelschaltungsstromkreis gebildet werden soll;
das zweite Ende der Wechselstromquelle (1) mit dem Reihenschaltungspunkt im Reihenkondensatorstromkreis verbunden ist;
der Reihenkondensatorstromkreis und der zweite Reihenschalterstromkreis den Reihenwandler bilden; und
der Reihenkondensatorstromkreis und der erste Reihenschalterstromkreis den Parallelwandler bilden,
**gekennzeichnet durch**
einen ersten Reaktor (40), der zwischen dem ersten Ende der Wechselstromquelle (1) und dem Reihenschaltungspunkt im ersten Reihenschalterstromkreis verbunden ist, wobei das erste Ende der Wechselstromquelle (1) mit dem ersten Ende der Last (6) verbunden ist; und
ein dritter Kondensator (32) mit der Wechselstromquelle (1) parallel geschaltet ist.

2. Elektroenergiewandler nach Anspruch 1, weiterhin mit:
einer Spannungserfassungseinrichtung (70), die die eingegebene Spannung des Elektroenergiewandlers, die ausgegebene Spannung des Elektroenergiewandlers und die Spannungen im ersten Parallelschaltungsstromkreis erfasst;
einer Stromerfassungseinrichtung (71), die den durch den ersten Reaktor (40) fließenden Strom erfasst;
einer Steuereinrichtung (72), die die ausgegebene Spannung des Elektroenergiewandlers unter Verwendung der Spannungswerte steuert, die von der Spannungserfassungseinrichtung (70) erfasst werden; und
wobei die Steuereinrichtung (72) den Strom, der durch den ersten Reaktor (40) fließt, unter Verwendung des von der Stromerfassungseinrichtung (71) erfassten Stromwerts steuert.

3. Elektroenergiewandler nach Anspruch 1 oder 2, weiterhin mit:
einem Wechselschalter (50) mit einem ersten Wechselkontakt (52), einem zweiten Wechselkontakt (53) und einem gemeinsamen Anschluss (51);
wobei die Verbindung zwischen dem zweiten Ende der Last (6) und dem ersten Ende des zweiten Reaktors (41) getrennt wird;
der erste Wechselkontakt (52) mit dem Reihenschaltungspunkt im Reihenkondensatorstromkreis verbunden ist;
das zweite Ende der Last (6) mit dem ersten Ende des zweiten Reaktors (41) über den gemeinsamen Anschluss (51) und dem zweiten Wechselkontakt (53) verbunden ist, während der Elektroenergiewandler normal arbeitet; und
der gemeinsame Anschluss (51) mit dem ersten Wechselkontakt (52) verbunden ist, wenn eine Anomalie im Elektroenergiewandler verursacht wird, wodurch eine Spannung von der Wechselstromquelle (1) zur Last (6) zugeführt werden soll.

4. Elektroenergiewandler nach irgendeinem der Ansprüche 1 bis 3, weiterhin mit:
einem Energiespeicherelement (60); und
einer Lade- und Entladeeinrichtung (61), die mit dem Energiespeicherelement (60) verbunden ist, wodurch der Last (6) eine Spannung unter Verwendung der im Energiespeicherelement (60) gespeicherten Energie zugeführt werden soll, wenn die Energiequellenspannung anormal ist.

5. Elektroenergiewandler nach irgendeinem der Ansprüche 1 bis 4, mit:
einem angezapften dritten Reaktor (42) als Ersatz für den zweiten Reaktor (41), wobei der dritte Reaktor (42) ein erstes Ende, ein zweites Ende und einen Anzapfanschluss umfasst;
wobei der Reihenschaltungspunkt im Reihenkondensatorstromkreis mit dem ersten Ende des dritten Reaktors (42) verbunden ist;
der Reihenschaltungspunkt im zweiten Reihenschalterstromkreis mit dem zweiten Ende der Last (6) und dem zweiten Ende des dritten Reaktors (42) verbunden ist;
das zweite Ende der Wechselstromquelle (1) vom Reihenschaltungspunkt im Reihenkondensatorstromkreis getrennt und mit dem Anzapfanschluss des dritten Reaktors (42) verbunden wird.

## Revendications

1. Convertisseur électrique de puissance comprenant :
un convertisseur série monté en série entre une source (1) de courant alternatif et une charge (6), le convertisseur série comprenant des condensateurs en tant que sa source de courant de convertisseur ;
un convertisseur parallèle monté en parallèle à la source (1) de courant alternatif ;
le convertisseur série compensant la variation de tension de la source (1) de courant alternatif, de manière à maintenir la tension appliquée à la charge (6) à une certaine valeur ; et
le convertisseur parallèle effectuant des opérations de charge et décharge entre la source (1) de courant alternatif et les condensateurs, de manière à compenser les variations de tension des condensateurs provoquées par l'opération de compensation du convertisseur série,
dans lequel le convertisseur électrique de puissance comprend en outre :
un premier circuit série de commutation, comprenant un premier dispositif (10) de commutation à semiconducteur, un deuxième dispositif (11) de commutation à semiconducteur, une diode (14) montée tête-bêche avec le premier dispositif (10) de commutation à semiconducteur et une diode (15) montée tête-bêche avec le deuxième dispositif (11) de commutation à semiconducteur, le premier et le deuxième dispositifs de commutation a semiconducteur étant montés en série l'un avec l'autre ;
un deuxième circuit série de commutation, comprenant un troisième dispositif (12) de commutation à semiconducteur et un quatrième dispositif (13) de commutation à semiconduteur, une diode (16) montée tête-bêche avec le troisième dispositif (12) de commutation à semiconducteur et une diode (17) montée tête-bêche avec le quatrième dispositif (13) de commutation à semiconducteur, le premier et le quatrième dispositifs de commutation à semiconducteur étant montés en série l'un avec l'autre ;
un circuit série de condensateur, comprenant un premier condensateur (30) et un deuxième condensateur (31) montés en série l'un avec l'autre ;
un quatrième condensateur (33) monté en parallèle à la charge (6) ou monté entre la deuxième extrémité de la charge (6) et la deuxième extrémité de la source (1) de courant alternatif ;
une deuxième réactance (41) montée entre la deuxième extrémité de la charge (6) et le point de connexion série dans le deuxième circuit série de commutation ;
le premier circuit série de commutation, le deuxième circuit série de commutation et le circuit série de condensateur étant montés en parallèle les uns avec les autres, de manière à constituer un premier circuit parallèle de connexion ;
la deuxième extrémité de la source (1) de courant alternatif étant reliée au point de connexion série du circuit série de condensateur ;
le circuit série de condensateur et le deuxième circuit série de commutation constituant le convertisseur série ; et
le circuit série de condensateur et le premier circuit série de commutation constituant le convertisseur parallèle **caractérisé par**
une première réactance (40) montée entre la première extrémité de la source (1) de courant alternatif et le point de connexion série du premier circuit série, la première extrémité de la source (1) de courant alternatif étant reliée à la première extrémité de la charge (6) ; et
un troisième condensateur (32) monté en parallèle à la source (1) de courant alternatif.

2. Convertisseur électrique de puissance suivant la revendication 1, comprenant en outre :
un moyen (70) de détection de la tension, détectant la tension d'entrée du convertisseur électrique de puissance, la tension de sortie du convertisseur électrique de puissance et les tensions dans le premier circuit parallèle de connexion ;
un moyen (71) de détection du courant, détectant le courant passant dans la première réactance (40) ;
un moyen (72) de commande, commandant la tension de sortie du convertisseur électrique de puissance en utilisant une valeur de tension détectée par le moyen (70) de détection de la tension ; et
les moyens (72) de commande commandant le courant passant dans la première réactance (40), en utilisant la valeur du courant détectée par le moyen (71) de détection du courant.

3. Convertisseur électrique de puissance suivant la revendication 1, comprenant en outre :
un commutateur (50) inverseur, comprenant un premier contact (52) d'inverseur, un deuxième contact (53) d'inverseur et une borne (51) commune ;
la connexion entre la deuxième extrémité de la charge (6) et la première extrémité de la deuxième réactance (41) étant déconnectée ;
le premier contact (52) inverseur étant connecté au point de connexion série du circuit série de condensateur ;
la deuxième extrémité de la charge (6) étant connectée à la première extrémité de la deuxième réactance (41), par l'intermédiaire de la borne (51) commune et du deuxième contact (53) inverseur, lorsque le convertisseur électrique de puissance travaille normalement ; et
la borne (51) commune étant connectée au premier contact (52) inverseur, lorsqu'une anomalie est provoquée dans le convertisseur électrique de puissance, de manière à appliquer une tension de la source (1) de courant alternatif à la charge (6).

4. Convertisseur électrique de puissance suivant l'une quelconque des revendications 1 à 3, comprenant en outre :
un élément (60) d'emmagasinage d'énergie ; et
un moyen (61) de charge et de décharge, relié à l'élément (60) d'emmagasinage d'énergie, de manière à appliquer une tension à la charge (6), en utilisant l'énergie emmagasinée dans l'élément (60) d'emmagasinage d'énergie, lorsque la tension d'alimentation en courant est anormale.

5. Convertisseur électrique de puissance suivant l'une quelconque des revendications 1 à 4, comprenant:
une troisième réactance (42) à prise en remplacement de la deuxième réactance (41), la troisième réactance (42) comprenant une première extrémité , une deuxième extrémité et une borne de prise ;
le point de connexion série du circuit série de condensateur étant connecté à la première extrémité de la troisième réactance (42) ;
le point de connexion série du deuxième circuit série de commutation étant connecté à la deuxième extrémité de la charge (6) et à la deuxième extrémité de la troisième réactance (42) ;
la deuxième extrémité de la source (1) de courant alternatif étant déconnectée du point de connexion série du circuit série de condensateur et reliée à la borne de prise de la troisième réactance (42).
